# EUROPEAN PATENT SPECIFICATION

(11) **EP 1 668 644 B1**
(45) Date of publication and mention of the grant of the patent: **08.12.2010**
(21) Application number: 04774593.0
(22) Date of filing: 14.09.2004
(51) Int. Cl.: G11B 23/03

(54) **DISC CARTRIDGE**
DATENTRÄGERKASSETTE
CARTOUCHE

(30) Priority: 16.09.2003 KR 2003064111; 16.09.2003 KR 2003064112; 16.09.2003 KR 2003064113; 16.09.2003 KR 2003064116; 16.09.2003 KR 2003064117
(43) Date of publication of application: 14.06.2006
(73) Proprietor: LG Electronics Inc., Seoul 150-721 (KR)
(72) Inventor: KIM, Jin, Yong, 109-602, Sunkyung Apt., Seongnam-si, Gyeonggi-do 463-928 (KR); PARK, Kyung, Chan, 75-201, Hyundai Apt., Seoul 135-788 (KR); LIM, Hyung, Jun, Seoul 137-784 (KR); EOM, In, Seop, 502-604, Samsung Raemian Apt., Yongin-si, Gyeonggi-do 449-564 (KR); KIM, Ji, Duk, Da-701, Samho Apt., Seoul 137-759 (KR)
(74) Representative: Vossius & Partner
(86) International application number: PCT/KR2004/002334
(87) International publication number: WO 2005/027129

(56) References cited:
- EP-A2- 0 772 196
- JP-A- 2000 260 153
- JP-A- 2001 189 068
- US-A- 6 078 562

## Description

The present invention relates to disk cartridges, and more particularly, to a disk cartridge which enables easy discounting of a disk therefrom, and put into a disk recorder or a disk reader for working in a state the disk is held in the cartridge.

In general, recently an optical disk, having information recorded on a surface of a disk with a beam of light, is interested as large capacity storage medium. In the optical disk media, there are CD (Compact Disc), DVD (Digital Versatile Disc), LD (Laser Disc), and the like. Currently, a Blu-Ray-Disc technology camp and an AOD (Advanced Optical Disc) technology camp are in keen competition on the next generation optical disc medium standards.

The Blur-Ray Disc has been developed aiming at HDVDR (High Definition Video Disc Recorder), and is a next generation optical disc storage medium in which a blu-ray laser beam is used for recording an amount of data greater than the present red laser beam. The Blur-Ray Disc has a data storage capacity of 27GIGA bytes, equivalent to an amount of data of a 13 hour running time of general motion picture, or a 2 hour running time of HDTV quality picture. Interest in the Blu-Ray Disc becomes high as a storage medium that can supplement disadvantages of the current DVD.

In the meantime, for making safe protection of a data read-out surface from infiltration of dusts, scratches, and the like during storage and transportation of the disc, the disc is stored in a state the disc is held inside of a separate case, and taken out of the case only when the disc is inserted into a disc recorder or a reader. Moreover, a read-out surface is susceptible to damage due to high recording density, and a thin read-out surface protection layer of the disc. In order to prevent the read-out surface suffer from damage liable to occur during transportation and mounting of the disc for inserting the disc into the disc recorder or the reader, recently there are cases when the cartridge itself having the disc held therein is inserted wholly.

As described above, currently, the disc recorder or reader is designed to receive only the disc, or the cartridge itself having the disc held therein wholly depending on service and purpose thereof. As an example, since a portable disc recorder or reader is required to have a small size, the portable disc recorder or reader is designed to receive only the disc, rather than receiving the cartridge wholly. However, in a case of a large sized non-portable disc recorder or reader, the disc recorder or reader is designed to receive the cartridge wholly for making safe protection of the disc. Therefore, when it is intended to use the disc held inside of the cartridge in the portable disc reorder and the reader, it is required to separate the disc from the cartridge.
EP-A-0772196 describes a cartridge body storing an optical disc has a disc inlet/outlet port for taking in and out the disc. A lid member is mounted on the cartridge body to be rotatable between a closed position and an opened position. The lid member has a pair of guide rails extending from the lid member into the cartridge body and facing the surfaces of the disc. Each guide rail has a guide hole. The cartridge body has guide grooves in which the guide rails slid, and a guide pin slidably inserted into the guide holes of the guide rails. During the opening and closing operation of the lid member, the guide grooves and guide pin guides the guide rails.
US-A-6078562 describes a disk cartridge includes a cartridge casing comprised of upper and lower shells attached along the peripheral edges thereof so as to define a disk receiving space within the cartridge casing. The casing structure is formed with an insert opening for allowing a data disk to be easily inserted into an operating position within the assembled cartridge casing. A slide area which may be formed as a recessed surface portion is defined at corresponding outer peripheral portions of the upper and lower shells. A disk access opening is formed in the casing shells at a location within the slide area for allowing a head portion of a disk drive to perform read and write operations to the disk. A slidable shutter is mounted astride the upper and lower shells at and edge of the cartridge casing, within the slide area. The cartridge structure further includes a cover portion including a hinge formed on one or both of the casing shells. The cover is openably and closably enabled via the hinge and includes locking means so as to securely close the cartridge casing in a closed position of the cover.
JP-A-2000260153 is aimed to simplify work of putting a disk-shaped recording medium in and out by slidingly actuating a second case member relative to a first case member having a disk loading section and offsetting and turning the superposed two case members relatively in a surface direction. When an upper case is opened, the optical disk is placed on the disk loading section of a lower case and the upper case is turned clockwise around a turning axis part as a center of turning, by which the upper case is superposed on the lower case. Next, the upper case is slid backward and is superposed in the state that the upper case is aligned to the lower case. At this time, the shutter pawl of the upper case fits into the notched part of the lower case and locking pawls engage pawl receiving parts; Consequently, the opening of the upper case is prohibited and the disk cartridge housed with the optical disk in a disk case is constituted.

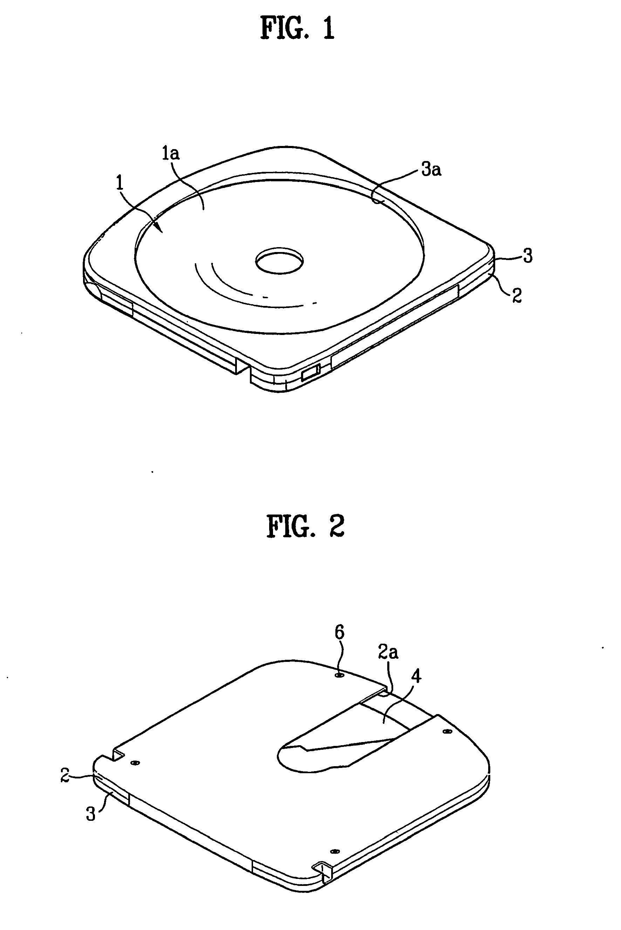

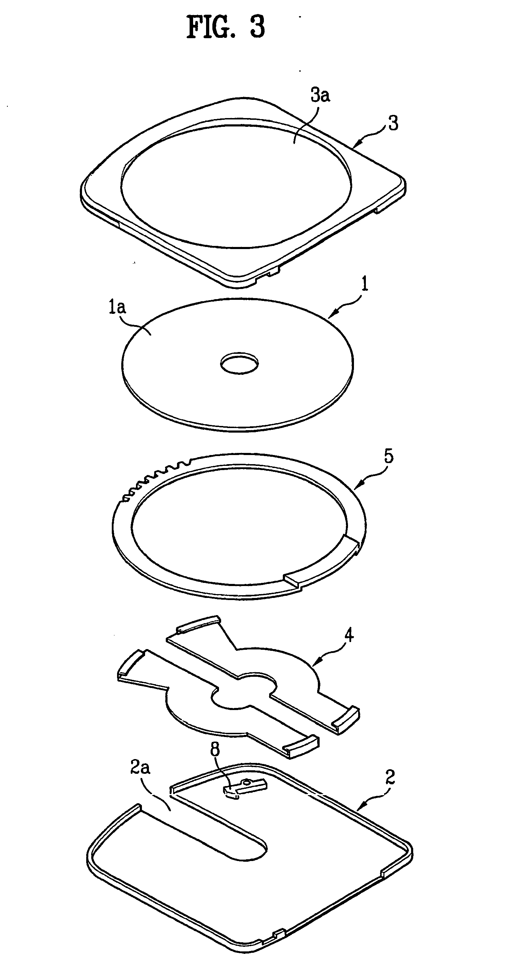

Meanwhile, referring to FIGS. 1 to 3, the disc is made to be used only in a state mounted inside of the cartridge. In more detail, the cartridge is provided with a lower housing 2 having a window 2a for enabling access of an external apparatus, such as the disc recorder and the reader, to the read-out surface (not shown) of the disc 1, a shutter 3 for closing the window 2a, a rotating wheel 4 for operating the shutter 3, a shutter latch 8 for keep the shutter in a close state, and an upper housing 3 having an opening 3a for exposing a label surface of the disc 1. The upper housing 3 and the lower housing 2 are held together rigidly with a plurality of screws 6.

Therefore, when it is intended to dismount the disc 1 from the cartridge, it is required unscrew the plurality of screws 6, which is not convenient. Moreover, it is also not convenient that the disc 1 is placed inside of the cartridge and the screws 6 are fastened for holding the upper housing 3 and the lower housing together rigidly again for secure storage of the disc after use of the disc 1. Consequently, as described before, in the case of cartridge described with reference to FIGS. 1 to 3, different disc recorders or readers that receive either thus disc only, or the cartridge wholly can not be used, conveniently.

Accordingly, the present invention is directed to a disk cartridge that substantially obviate one or more problems due to limitations and disadvantages of the related art.

An object of the present invention is to provide a disc cartridge which enables easy separation of a disc from the disc cartridge and easy mounting of the disc on the cartridge.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these-objects and other advantages and in accordance with the purpose of the invention, as embodied and broadly described herein, a disc cartridge includes a lower housing having a window for a recorder or a reader to access to a read-out surface of a disc, and an upper housing secured to the lower housing for holding the disc between the lower housing and the upper housing such that the disc can be taken out therefrom, the upper housing having at least a portion configured movable for securing a space for taking out the disc therethrough.

The upper housing includes at least one stationary portion secured to the lower housing, and at least one movable portion movably coupled to the stationary portions. The movable portion is slidably coupled to the stationary portions, the movable portion being slidable in a horizontal direction. In this case the movable portion can be projected beyond an edge of the lower housing. The at least one movable portion includes one pair of the movable portions arranged oppositely in a periphery of the upper housing, each of the movable portions being slidable in a radial direction of the disc. Meanwhile, the movable portion may be coupled to the stationary portion, so as to be rotatable in up/down directions, or may be coupled to the stationary portion, so as to be rotatable in a horizontal direction.

The upper housing includes at least one stationary portion secured to the lower housing, and at least one movable portion movably coupled to the lower housing. The movable portion may be coupled to the lower housing, so as to be rotatable in up/down directions. The movable portion may be coupled to the lower housing, so as to be rotatable in a horizontal direction. In this case, the movable portion can be projected beyond an edge of the lower housing. The movable portion may coupled to the lower housing, so as to be slidable in a horizontal direction, or rotatable in up/down directions of the stationary portion after the movable portion slides with respect to the stationary portion in a horizontal direction.

The lower housing includes a portion movable together with a portion of the upper housing when the portion of the upper housing moves for taking out the disc to an outside of the cartridge.

The disc cartridge further includes a locking member for preventing the movable portion form moving easily when the movable portion covers a portion of the disc. The locking member may include a projection provided to one of the movable portion and the stationary portion, and a hole provided to the other one of the movable portion and the stationary portion for receiving the projection when the movable portion is not moved with respect to the stationary portion. Alternatively, the locking member may include a projection provided to one of the movable portion and the lower housing, and a hole provided to the other one of the movable portion and the lower housing for receiving the projection when the movable portion is not moved with respect to the lower housing.

The disc cartridge may further include a limiting member for preventing the movable portion from breaking away from the stationary portion completely, when the movable portion slides on the stationary portion. The limiting member may includes a projection provided to one of the movable portion and the stationary portion, and a hole provided to the other one of the movable portion and the stationary portion, for receiving the projection when the movable portion slides on the stationary portion for more than a predetermined distance.

The disc cartridge may further include a disc holder for holding edges of the disc when the movable portion covers the portion of the disc for preventing the disc held between the upper, and lower housings from shaking. The disc holder may include at least one first holder secured to at least one of the stationary portion and the lower housing, for inserting and holding an edge of the disc, and at least one second holder secured to the movable portion for inserting and holding an edge of the disc when the movable portion covers the portion of the disc.

The upper housing has an opening for exposing a label surface of the disc adequately, the opening having a size through which the disc does not come out when the upper housing is not moved. The upper housing is coupled to the lower housing such that the upper housing is rotatable in a horizontal direction, wholly. In this case, the upper housing can be projected beyond an edge of the lower housing.

In another aspect which is not in scope of the claims, a disc cartridge includes a lower housing having a window for a recorder or a reader to access to a read-out surface of the desk, and an upper housing secured to the lower housing for holding the disc between the lower housing and the upper housing such that the disc can be taken out therefrom, wherein the upper housing includes opposite stationary portions secured to the lower housing to expose a disc label surface, and movable portions provided between the stationary portions such that the movable portions are rotatable in up/down directions each for covering a portion of the label surface to hold the disc, or secure a space for taking out the disc.

In another aspect which is not in scope of the claims, a disc cartridge includes a lower housing having a window for a recorder or a reader to access to a read-out surface of the desk, and an upper housing secured to the lower housing for holding the disc between the lower housing and the upper housing such that the disc can be taken out therefrom, wherein the upper housing includes opposite stationary portions secured to the lower housing to expose a disc label surface, and movable portions provided between the stationary portions such that the movable portions are slidable in a horizontal direction with respect to the stationary portions for covering a portion of the label surface to hold the disc, or secure a space for taking out the disc.

In further aspect which is not in scope of the claims, a disc cartridge includes a lower housing having a window for a recorder or a reader to access to a read-out surface of a disc, and an upper housing secured to the lower housing for holding the disc between the lower housing and the upper housing such that the disc can be taken out therefrom, the upper housing having at least a portion rotatable in a horizontal direction until the disc can be taken out.

In still further aspect which is not in scope of the claims, a disc cartridge includes a lower housing having a window for a recorder or a reader to access to a read-out surface of a disc, and an upper housing secured to the lower housing for holding the disc between the lower housing and the upper housing such that the disc can be taken out therefrom, wherein the upper housing includes a stationary portion, and a movable portion coupled to the lower housing such that the movable portion is slidable in a horizontal direction to hold the disc or secure a space for taking out the disc.

In yet further aspect which is not in scope of the claims, a disc cartridge includes a lower housing having a window for a recorder or a reader to access to a read-out surface of a disc, and a first piece and a second piece each rotatable about a rotating axis for closing/opening the first, and second pieces, and an upper housing secured to the lower housing for holding the disc between the lower housing and the upper housing such that the disc can be taken out therefrom, the upper housing having a first piece secured to the first piece of the lower housing, and a second piece secured to the second piece of the lower housing.
It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a perspective view of a related art disc cartridge;

FIG. 2 illustrates a back side of the disc cartridge in FIG. 1;

FIG. 4 illustrates a perspective view of a disc cartridge in accordance with a first or second preferred embodiment of the present invention;

FIGS. 5A and 5B illustrate perspective views each showing a rotated moving portion in a disc cartridge in accordance with the first preferred embodiment of the present invention;

FIG. 6 illustrates a perspective view of a disc cartridge in accordance with a second preferred embodiment of the present invention;

FIG. 7A illustrates a perspective view of a disc cartridge in accordance with a third preferred embodiment which is not in scope of the claims;

FIG. 7B illustrates a perspective view showing an upper housing rotated on the disc cartridge in FIG. 7A;

FIG. 8 illustrates a perspective view of a variation of the disc cartridge in accordance with the third preferred embodiment which is not in scope of the claims;

FIG. 9A illustrates a perspective view of a disc cartridge in accordance with a fourth preferred embodiment which is not in scope of the claims;

FIG. 9B illustrates a perspective view showing a moving portion moved on the disc cartridge in FIG. 9A;

FIGS. 9C to 12B illustrate perspective views of variations of the disc cartridge in accordance with the fourth preferred embodiment which is not in scope of the claims;

FIG 13A illustrates a perspective view of a disc cartridge in accordance with a fifth preferred embodiment which is not in scope of the claims; and

FIG. 13B illustrates a perspective view of an opened state of the disc cartridge in FIG. 13.

Reference will now be made in detail to the preferred embodiments of the present invention, examples of which are illustrated in the accompanying drawings. Wherever possible, the same reference numbers will be used throughout the drawings to refer to the same or like parts.

The disc cartridge of the present invention includes a lower housing and an upper housing held together. Between the upper housing and the lower housing, there is an optical disc having a read-out surface and a label surface. The disc has the read-out surface arranged to face the lower housing between the upper and lower housings, and the lower housing has a window for access to the read-out surface of the disc by a disc recorder for recording a data or a disc reader for reading the data from the read-out surface. The window includes a spindle window at a center of the lower housing for a spindle of the disc recorder or the disc reader to hold a center of the disc, and a head window for a head of the disc recorder or the disc recorder to direct a laser beam to the read-out surface. The spindle window and the head window are united as one to form one window.

Between the upper housing and the lower housing, in more detail, between the lower housing and the read-out surface of the disc, there are a shutter for closing the window, a rotating wheel for operating the shutter, and a shutter latch for keeping the shutter in a closed position. Therefore, upon insertion of the disc cartridge in the disc recorder or reader, the disc recorder or reader moves the shutter latch, to release locking of the rotating wheel and shutter, and opens the shutter, accesses to the read-out surface of the disc, and writes a data on the read-out surface or reads data from the read-out surface. Because above structure has no direct relationship with dismounting/mounting the disc from/on the disc cartridge, no more detailed description will be given.

The disc cartridge of the present invention has an improved structure for easy dismounting/mounting of the disc from/on the disc cartridge. For this, the upper housing has a structure at least a portion of which is rotatable or slidable so that the disc is detachably held in the upper housing. A portion of the lower housing may also be rotatable. The disc cartridge of the present invention has such a structure for easy securing of a space for taking out or inserting the disc from/into the cartridge, to make dismounting/mounting of the disc from/on the disc cartridge easy.

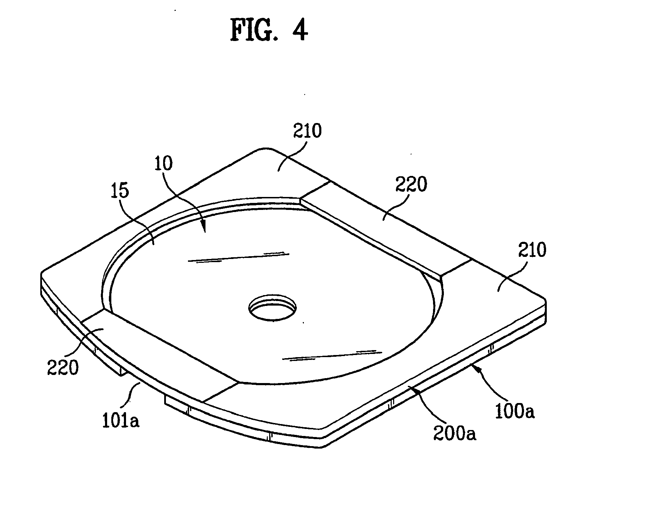

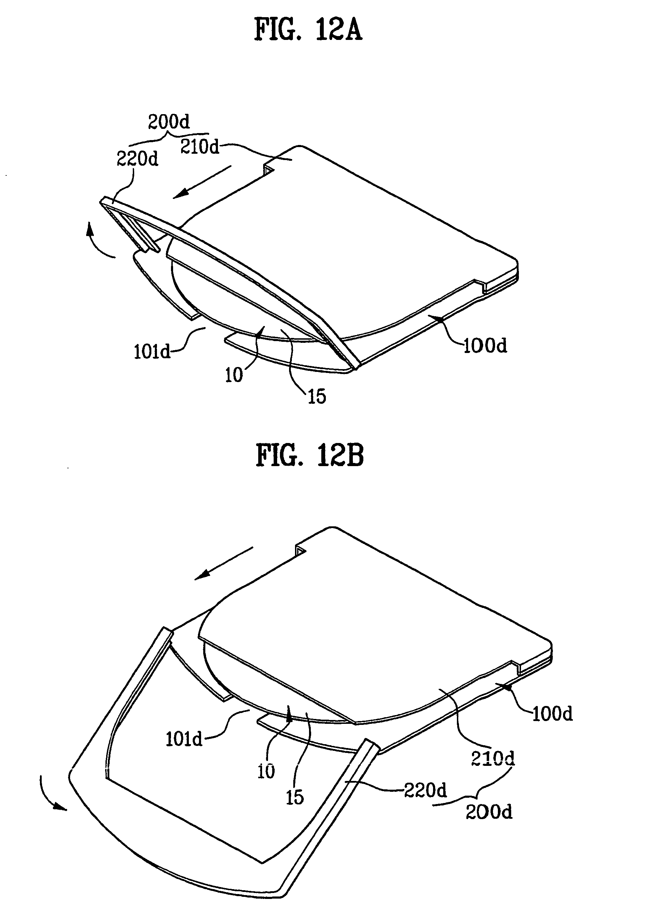

Accordingly, the disc cartridge of the present invention can be opened easily, to permit easy dismounting/mounting of the disc from/on the disc cartridge. Accordingly, the disc cartridge of the present invention provides convenience that the disc cartridge is applicable, not only to a disc recorder and a reader that receive a cartridge wholly, or a disc recorder and a reader that receive the disc only. The cartridge of the present invention has a variety of embodiments and variations thereof as illustrated in FIGS. 4 to 13B, referring to which the embodiments and variations thereof will be described in more detail.

### FIRST EMBODIMENT

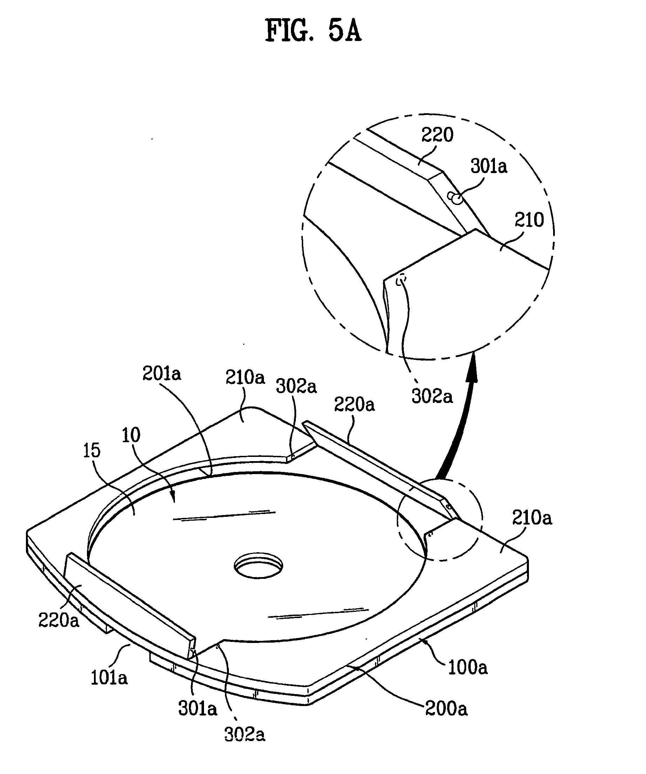

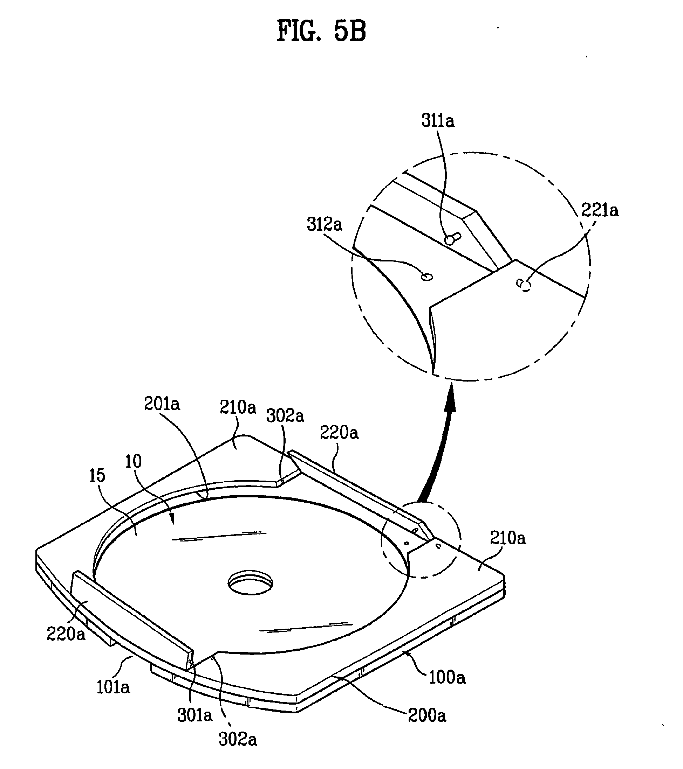

FIG. 4 illustrates a perspective view of a disc cartridge in accordance with a first or second preferred embodiment of the present invention, and FIGS. 5A and 5B illustrate perspective views each showing a rotated moving portion in a disc cartridge in accordance with the first preferred embodiment of the present invention, referring to which the disc cartridge in accordance with a first preferred embodiment of the present invention will be described.

Referring to FIG 4, there is a lower housing 100a including a window 101a for a disc recorder or reader to access to a read-out surface (not shown) of a disc 10. An upper housing 200a secured to the lower housing 100a has stationary portions 210a and movable portions 220a rotatably mounted between the stationary portions 210a.

For an example, there are one pair of stationary portions 210a respectively secured to the lower housing 100a, arranged opposite to each other with reference to the disc 10 on the lower housing 100a. The stationary portions 210a mounted thus do not cover, but expose a label surface 15 opposite to the read-out surface of the disc 10. Therefore, when the disc 10 is taken out of the cartridge and inserted into the cartridge again, the disc 10 is not interfered by the stationary portions 210a.

There are, for an example, one pair of the movable portions 220a between the stationary portions 210a as shown in FIG 4. In more detail, as shown in FIGS. 5A and 5B, the movable portions 220a are rotatable in up/down directions, to cover a portion of the label surface 15 accordingly as shown in FIG 4, to hold the disc 10, or to secure a space for taking out the disc 10 from the cartridge as shown in FIGS. 5A and 5B.

The movable portions 220a are rotatably mounted on the lower housing 100a or the stationary portions 210a. For an example, as shown in FIG. 5A, the movable portions 220a may be formed as one unit with the lower housing 100a, when each connection portion between the lower housing 100a and the movable portion 220a are flexible so as to be foldable/unfoldable. As another example, as shown in FIG 5B, the movable portions 220a may be rotatably pivoted on the stationary portions 210a with pivots 221a. In this instance, the pivot 221a is projected from the movable portion 220a, a hole for receiving the pivot 221 a is in the stationary portion 210a. However, the configuration is not limited to this, but the pivot 221a may be on the stationary portion 210a and the hole is in the movable portion 220a. In the meantime, similar to FIG. 5B, the movable portion 220a may be pivoted on the lower housing 100a.

The cartridge is required to make secure reception of the disc 100. Therefore, it is preferable that the movable portion 220a is not liable to rotate once the movable portion 220a is engaged with the stationary portion 210a, Of course, as shown in FIG. 4, when the movable portion 220a covers a portion of the label surface 15 of the disc 10, the movable portion 220a does not open easily owing to friction force as side surfaces of the movable portion 220a and the stationary portion 210a are in contact to each other. Nevertheless, frequent rotation of the movable portion 220a or use of the cartridge for a long time may cause wear down of the side surfaces of the movable portion 220a and the stationary portion 210a, resulting in easy opening of the movable portion 220a. Therefore, it is preferable that a locking member is provided for preventing the movable portion 220a from swinging when the movable portion 220a covers a portion of the label surface 15 to hold the disc 10.

It is preferable that the locking member is far from a rotation center of the movable portion adequately, and, as shown in FIGS. 5A and 5B, includes projections 301a, and 311a and holes 302a, and 312a. For an example, as shown in FIG 5A, the projection 301a is projected from the stationary portion 210a, and the hole 302a is in the movable portion 220a. However, the configuration is not limited to this, but the projection may be provided to the movable portion 220a and the hole 302a may be provided to the stationary portion 210a.

As another example, referring to FIG 5B, the projection 311a may be projected from the movable portion 220a, and the hole 312a may be provided to the lower housing 100a. The configuration is not limited to this, but the projection 311a may be provided to the lower housing 100a, and the hole 312a may be provided to the movable portion 220a. In this cases too, of course, the projections and the holes 312a are arranged not to interfere with the disc 10.

Referring to FIG, 4, the locking member enables to prevent the movable portion 220a from swinging easily enough to be held in position such that the disc 10 is held in the cartridge securely, because the projections 301a, and 302a maintain a snap fitting state with the holes 302a, and 312a when the movable portion 220a covers the portion of the disc 10. In the meantime, though not shown, a press type button, or a slide type button using a spring and a hook which are used widely as a locking member may be employed.

In the meantime, as described before, because the window 101a in the lower housing 100a is shut off by the shutter (not shown), the read-out surface of the disc 10 in the cartridge is protected from an outside securely. Opposite to this, the label surface 15, an opposite side of the read-out surface of the disc 10, is exposed to an outside through an opening 201 a surrounded, and defined by opposite one pair of stationary portions 210a, and one pair of the movable portions 220a between the stationary portions 210a. Therefore, the user can make confirmation of information on contents of the disc 10 printed on the label surface 15 of the disc 10, and find a required disc 10, without opening many cartridges one by one for finding a disc 10 intended to use.

When the disc recorder or reader that receives the cartridges wholly is used, the disc cartridge of the present invention is inserted into the disc recorder or reader wholly in a state as shown in FIG. 4. Then, the disc recorder or reader opens the shutter, and writes a data on the read-out surface of the disc 10, or reads the data from the read-out surface, through the window 101 a. Opposite to this, when the disc recorder or reader that receives the disc only is used, it is required to separate the disc 10 from the disc cartridge of the present invention. In this instance, as shown in FIG 4, since a space for taking out the disc 10 is secure upon swinging the movable portions 220a away from a portion of the label surface 15 of the disc 10 as shown in FIGS. 5A and 5B, the user can take out the disc 10 from the cartridge easily. Of course, after the disc 10 dismounted from the cartridge is used, the disc 10 is mounted on the cartridge, and the movable portion 220a is rotated in a direction opposite to above, to secure the movable portion 220a to the disc 10.

A structure of the disc cartridge in accordance with the first preferred embodiment of the present invention is not limited to above, but various modifications and variations can be made as far as the modifications and the variations do not depart from the scope of the invention. For an example, in joining the movable portion 220a and the lower housing 100a, it may be configured that one hinge shaft passes through a connection portion of the movable portion 220a and the lower housing 100a. Moreover, the configuration may not be limited to make all the one pair of the movable portions open/close, but to make one of the movable portions 220a is stationary while the other one of the movable portions 220a is rotatable, so that the disc 10 can be taken out from, or insert through the rotatable side of the movable portion 220a.

As described before, the disc cartridge in accordance with a first preferred embodiment of the present invention can be opened/closed easily. Therefore, the disc cartridge of the present invention provides convenience of easy application of the disc cartridge, not only to the disc recorder and reader that receive the cartridge wholly, but also to the disc recorder and reader that receive the disc only. Moreover, since the disc cartridge in accordance with the first preferred embodiment of the present invention has a structure in which the disc 10 is mounted/dismounted by opening/closing the other portion (movable portion) of the upper housing 200a in a state a portion (stationary portion) of the upper housing 200a held together with the lower housing 100a is stationary, portions that move can be minimized. According to this, an overall distortion of the cartridge can be prevented, and overall rigidity of the cartridge can be maintained continuously during the disc 10 is taken out of the cartridge, thereby minimizing damage to the cartridge even in a case an external impact is occurred in a process of removing the disc 10.

### SECOND EMBODIMENT

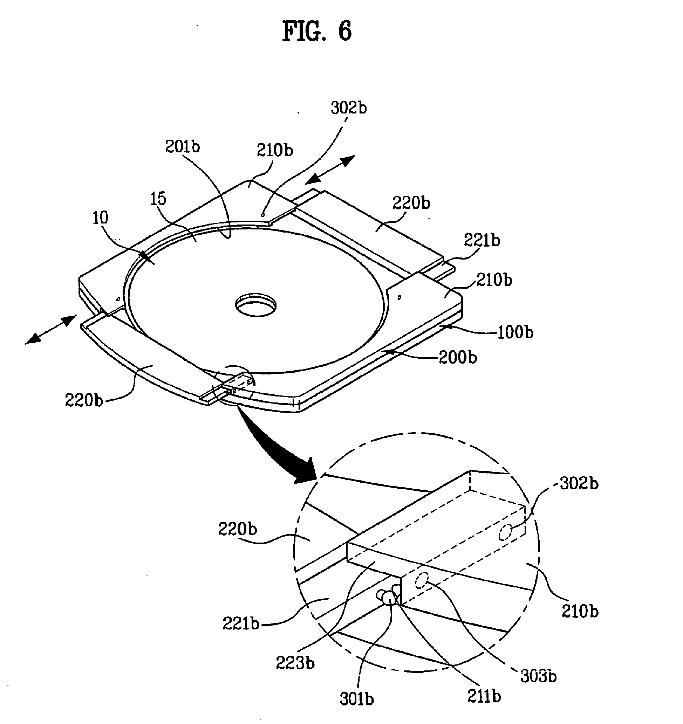

As described before, FIG. 4 illustrates a disc cartridge in accordance with, not only the first preferred embodiment of the present invention, but also a second preferred embodiment of the present invention. FIG. 6 illustrates a perspective view of a disc cartridge in accordance with a second preferred embodiment of the present invention, having a slid movable portion. As shown in above drawings, the disc cartridges in accordance with first, and second embodiments are very similar in structures. In more detail, the lower housing 100b and the stationary portion 210b of the upper housing 200b of the disc cartridge in accordance with the second preferred embodiment of the present invention have the same structures with the lower housing 100a and the stationary portion 210a of the upper housing 200a of the disc cartridge in accordance with the first preferred embodiment of the present invention, respectively. However, while the first embodiment disc cartridge has the movable portion 220a rotatable in up/down direction of the cartridge, the second embodiment disc cartridge has the movable portion 220b slidable in a horizontal direction of the cartridge. Therefore, the second embodiment disc cartridge will be described with respect to difference from the first embodiment disc cartridge, particularly, centered on the movable portion 220b.

Referring to FIGS. 4 and 6, there are, for an example, one pair of movable portions of the upper housing 200b, provided so as to be movable between the stationary portions 210b of the upper housing 200b. In more detail, as shown in FIG 6, the movable portions 220b are slidable in a horizontal direction with respect to the stationary portions 210b, to cover a portion of a label surface 15 of the disc 10 held between the lower housing 100b having the window 101b and the movable portions as shown in FIG 4, or to secure a space for taking the disc 10 out of the cartridge as shown in FIG 6. As shown in FIG 6, each of the movable portions 220b is movable in a radial direction of the disc 10, and, when the movable portion 220b moves for securing the space for taking the disc 10 out of the cartridge, the movable portion is drawn beyond an edge of the lower housing 100b.

As described before, the horizontal direction sliding of the movable portion 220b with respect to the stationary portion 210b is guided by guide protrusions 221b and channels 211b. The guide protrusion 221b is, for an example, projected from the movable portion 220b as shown in FIG 6, and the guide channel 211b that receives the guide protrusion 221b is provided to the stationary portion 210b. The configuration of the movable portion is not limited to this, but the guide protrusion 221b may be provided to the stationary portion 210b and the guide channel 211b may be provided to the movable portion 220b. It is preferable that the guide protrusion 221b and the guide channel 211b are elongated along a direction of sliding of the movable portion 220b for stable guidance of the sliding of the movable portion 220b.

For reference, FIG 6 illustrates an example in which the guide protrusions 221b are provided at opposite sides of the movable portion 220b, and the guide channels 211b in sides of the stationary portions 210b engaged with the movable portions 220b for inserting and sliding the guide protrusions 221b, respectively. The guide channel 211b is formed between a holding protrusion 223b extended from an upper surface of the stationary portion 210b toward the movable portion 220b and the lower housing 100b, and the guide protrusion 221b is extended from a lower surface of the movable portion 220b toward the stationary portion 210b such that the guide protrusion 221b can be inserted in the guide channel 211b between the holding protrusion 223b and the lower housing 100b.

In the meantime, though not shown, the guide protrusion 221b and the guide channel 211b may be provided to the movable portion 220b and the lower housing 100b, respectively. For an example, if the guide protrusion 221b is provided to a lower surface of the movable portion 220b, and the guide channel 211b is provided to an upper surface of the lower housing 100b for inserting and sliding of the guide protrusion 221b, the guide protrusion 221b and the guide channel 211b can make stable guidance of the sliding of the movable portion 220b. Of course, the configuration is not limited to this, but the guide protrusion 221b may be projected to the upper surface of the lower housing 100b and the guide channel 211b may be provided to the lower surface of the movable portion 220b. If the guide protrusions 221b and the guide channels 211b are provided to the movable portion 220b and the lower housing 100b thus, it is necessary that the guide protrusions 221b and the guide channels 211b are arranged so as to make no interference with the disc 10 held between the lower housing 100b and the upper housing 200b.

In the meantime, the second embodiment disc cartridge also includes a locking member for preventing the movable portion 220b from moving easily when the movable portion 220b is holding the disc 10. The locking member includes projections 301b and holes 302b. For an example, the projection 301a is projected from the movable portion 220b, and the hole 302b is provided to the stationary portion 210b. As shown in FIG 6, the projection 301b is projected from a side of the guide protrusion 221b at a side of the movable portion 220b toward the stationary portion 210b, and the hole 302b is provided to the guide channel 211b at a side of the stationary portion 210b for receiving the projection 301b. Opposite to this, the projection 301b may be provided to the stationary portion 210b, more specifically, to the guide channel 211b, and the hole 302b may be provided to the movable portion 220b, more specifically to the guide protrusion 221b. Moreover, though not shown, the projection 301b and the hole 302b of the locking member may be provided to the movable portion 220b and the lower housing 100b like the guide protrusion 221b and the guide channel 211b. The projection 301b is provided to one of the movable portion 220b and the lower housing 100b, and the hole 302b is provided to the other one of the movable portion 220b and the lower housing 100b. Of course, it is necessary that the projection 301b and the hole 302b are arranged at positions where the projection 301b and the hole 302b make no interference with the disc 10.

Referring to FIG. 4, the locking member enables to make secure holding of the disc 10 in the cartridge because the projection 301a is kept inserted in the hole 302a, preventing the movable portion 220b from moving easily when the movable portion 220b covers the portion of the disc 10. In the meantime, though not shown, a press type button, or a slide type button using a spring and a hook which are used widely as a locking member may be employed.

Moreover, the disc cartridge in accordance with the second embodiment of the present invention further includes a limiting member for preventing the movable portion 220b from breaking away from the stationary portion completely when the movable portion 220b moves for securing the space for taking out the disc 10. The limiting member includes a projection and a hole 303b, wherein the projection is preferably one the same with the projection 301b of the locking member described before, of which description will be omitted. As shown in FIG 6, the hole 303b of the limiting member is provided to the stationary portion 210b such that the hole 303b receives the projection 301b provided to the movable portion 220b when the movable portion 220b moves more than a predetermined distance with respect to the stationary portion 210b.

For this, referring to FIG. 6, the hole 303b of the limiting member is arranged a predetermined distance away from the hole 302b of the locking member within the guide channel 211b. In this case, the movable portion 220b can make stable holding of the disc 10 because the projection 301b is held at the hole 302b of the locking member when the movable portion 220b covers a portion of the label surface 15 to hold the disc 10, and the movable portion 220b is not separated from the cartridge completely because the projection 301b is inserted in the hole 303b of the limiting member when the movable portion 220b moves more than a predetermined distance toward an outside of the cartridge for securing the space for taking out the disc 10. Therefore, by means of one projection 301b and two holes 302b, and 303b, the movable portion 220b can make secure holding of the disc 10, have a sliding range thereof limited securely.

FIG. 6 illustrates an example in which the locking member and the limiting member share one projection 301b. However, the configuration is not limited to this, but a separate projection may be provided for the limiting member. In this case, the hole 303b of the limiting member may not be a shape of the hole in FIG 6, but an elongated groove. In more detail, as the hole of the limiting member, the elongated groove with a closed end may be provided to the stationary portion 210b or the lower housing 100b, and the projection of the limiting member is provided to the movable portion 220b such that the projection slides in the elongated groove. Of course, the elongated groove and the projection may be formed at opposite positions from above. The elongated groove and the projection slidable therein provided thus as the limiting member enable to prevent the movable portion from moving any further as the projection moves along the elongated groove when the movable portion 220b moves, and the projection is held at the closed end when the movable portion 220b moves to the maximum.

Meanwhile, the cartridge in accordance with the second embodiment of the present invention described with reference to FIG. 6 is compared to the cartridge in accordance with the first embodiment of the present invention described with reference to FIGS. 5A and 5B, to find that the two embodiments have the same operation and advantages actually, with only difference in ways of operation of the movable portion 220b. Therefore, the operation and advantages of the second embodiment disc cartridge will be omitted.

### THIRD EMBODIMENT AND A VARIATION which is not in scope of the claims

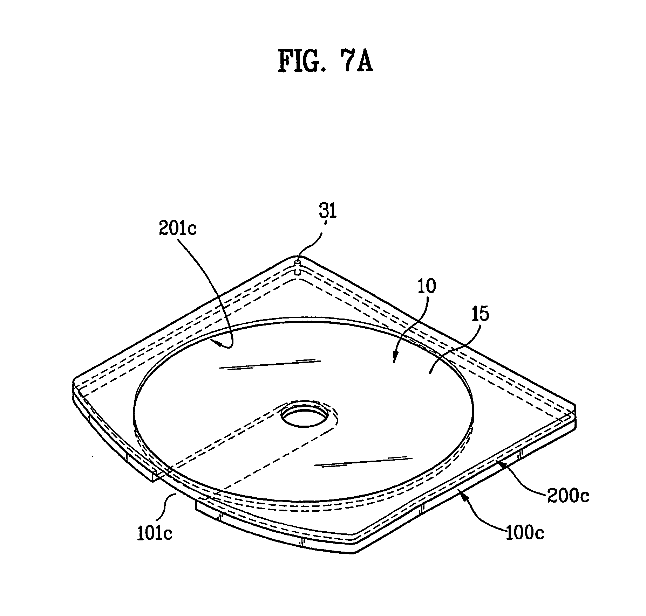

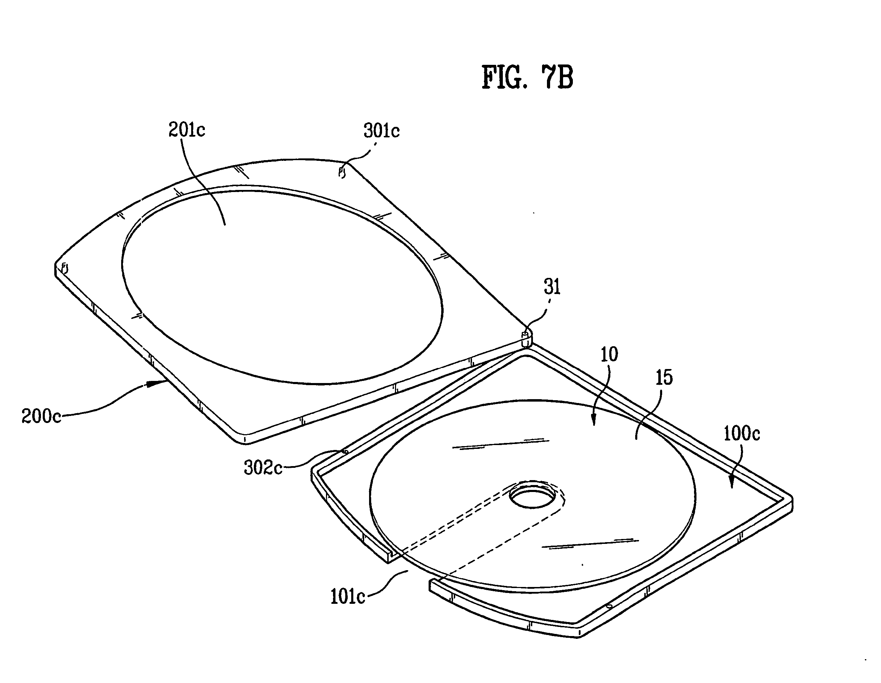

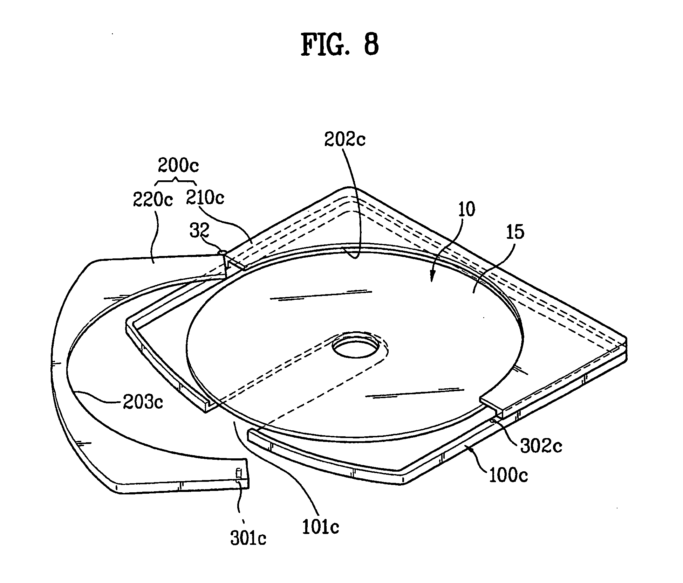

FIGS. 7A, and 7B illustrate perspective views each showing a disc cartridge in accordance with a third preferred embodiment of the present invention, and FIG 8 illustrates a perspective view of a variation of the disc cartridge in accordance with the third preferred embodiment of the present invention. As shown in above drawings, the disc cartridge of the third preferred embodiment or the variation thereof includes a lower housing 100c with a window 101c the same with the lower housing 100a or 100b in the first or second embodiment. However, an upper housing 200c held together with the lower housing 100c is different in that at least a portion of the upper housing 200c is made to be able to rotate in a horizontal direction until the disc 10 held between the upper and lower housings 200a, and 100a can be taken out. Accordingly, the disc cartridge in accordance with the third preferred embodiment or the variation thereof of the present invention will be described centered on the difference described above.

Referring to FIGS. 7A and 7B, the upper housing 200c of the disc cartridge in accordance with the third preferred embodiment of the present invention is formed as one unit, and rotatable in a horizontal direction with respect to the lower housing 100c, wholly. For this, the upper housing 200c and the lower housing 100c are coupled with a pivot 31. in this instance, it is preferable that the pivot 31 is provided to one corner of the upper housing 200c and the lower housing 100c. The pivot may include a projection on one of the upper housing 200c and the lower housing 100c, and a hole in the other one of upper housing 200c and the lower housing 100c for inserting the projection, or holes in the upper housing 200c and the lower housing 100c in communication with each other, and one shaft passed through the holes at the same time. Once the upper housing 200c and the lower housing 100c are coupled with the pivot 31, the upper housing 200c can be rotated in the horizontal direction beyond an edge of the lower housing 100c.

Referring to FIGS. 7A and 7B, the upper housing 200c has an opening 201c. The opening 201c exposes a portion of the label surface 15 such that the user can make easy confirmation of the label surface 15 of the disc 10. However, because the opening 201 c is smaller than the disc 10, the disc 10 can not pass the opening 201 c.

The disc cartridge in accordance with the third preferred embodiment of the present invention further includes a locking member for preventing easy separation of the upper housing 200c and the lower housing 100c coupled together in a state the upper housing 200c and the lower housing 100c hold the disc 10. As such a locking member, a projection 301c and a hole 302c as described before are provided. As shown in FIGS. 7A and 7B, the projection 301c is projected downward from the upper housing 200c, and the hole 302c is provided to an upper surface of the lower housing 100c so that the projection 301c is inserted therein when the upper housing 200c and the lower housing 100c are closed. However, the configuration is not limited to this, but the projection 301c may be provided to the lower housing 100c, and the groove 302c may be provided to the upper housing 200c. In the meantime, though not shown, a press type button, or a slide type button using a spring and a hook which are used widely as a locking member may be employed.

The disc cartridge in accordance with the third preferred embodiment of the present invention has a very simple structure and can be manufactured easily at a low cost because the upper housing 200c and the lower housing 100c are coupled with one pivot 31. Moreover, dismounting/mounting of the disc 10 from/on the cartridge only requires rotating of the upper housing 200c with respect to the lower housing 100c, the work is also very simple.

As described, the disc cartridge in accordance with the third preferred embodiment of the present invention is configured such that a space for taking out or inserting in the disc 10 is secured by rotating the upper housing 200c in a horizontal direction with respect to the lower housing 100c wholly. In this case, the upper housing 200c is required to be rotated by a substantial angle with respect to the lower housing 100c. In order to solve such a problem, the third embodiment of the present invention provides a variation as shown in FIG. 8. The disc cartridge in accordance with the variation of the third embodiment of the present invention is configured such that a portion of the upper housing 200c can be rotatable in a horizontal direction. Therefore, as shown in FIG. 8, even if a portion of the upper housing 200c is rotated by a small angle, the space for taking out or inserting the disc 10 is secured, adequately. The disc cartridge in accordance with the variation of the third embodiment of the present invention will be described in more detail with reference to FIG 8. Repetitive descriptions with above description will be omitted.

Referring to FIG. 8, the upper housing 200c of the disc cartridge in accordance with the variation of the third embodiment of the present invention includes a stationary portion 210c and a movable portion 220c. The stationary portion 210c is secured to the lower housing, and covers the label surface of the disc 10. Therefore, the stationary portion 210c prevents the disc 10 from slipping out of the cartridge from between the upper housing 200c and the lower housing 100c as far as the movable portion 220c does not move. The movable portion 220c is coupled to the cartridge so as to rotatable in a horizontal direction, to cover a portion of the label surface 15 of the disc 10 to hold the disc 10, or to secure the space for taking out the disc 10 from the cartridge.

The movable portion 220c may be rotatably coupled to the stationary portion 210c, or to the lower housing 210c. For an example, the movable portion 220c is rotatably coupled to the stationary portion 210c, the movable portion 220c and the stationary portion 210c may be fabricated in different bodies, and coupled with the pivot 32. In a case the movable portion 220c is rotatably coupled to the lower housing 100c, the movable portion 220c and the stationary portion 210c may be fabricated in different bodies, and movable portion 220c is coupled to the lower housing 100c with the pivot 32. however, the configuration is not limited to above, but the movable portion 220c may be made rotatable without the pivot 32. For an example, the stationary portion 210c and the movable portion 220c are fabricated in one unit, while a connection portion of the stationary portion 210c and the movable portion 220c is formed flexible so as to be able to be folded/unfolded like the connection portion of the lower housing 100a and the movable portion 220a described with reference to FIG. 5A.

Referring to FIG. 8, the upper housing 200c may be provided with an opening 201c for exposing the label surface 15 of the disc 10. The opening 201c is defined by a space between the movable portion 220c and the stationary portion 210c, for which the stationary portion 210c and the movable portion 220c have opposite cut away portions 202c, and 203c, respectively. Then, when the movable portion 220c covers the portion of the disc 10, the one opening 201c is formed by the two cut away portions 202c, and 203c, through which the user can read the label surface 15 of the disc 10 easily. Of course, the opening 201 c has a size through which the disc 10 can not slip out.

The disc cartridge in accordance with the variation of the third embodiment of the present invention further includes a locking member for preventing the movable portion 220c from moving easily when the movable portion 220c covers the portion of the label surface 15 of the disc 10. As described before, the locking member includes a projection 301c, and a hole 302c for receiving the projection 301c when the movable portion 220c covers the portion of the label surface 15, wherein the projection 301c is provided, for an example, to the movable portion 220c and the hole 302c is provided to the lower housing 100c, as shown in FIG. 8. However, the configuration is not limited to this, but the projection 301c may be provided to the lower housing 100c, and the hole 302c may be provided to the movable portion 220c. Moreover, though not shown, the projection 301c may be provided one of the stationary portion 210c and the movable portion 220c and the hole 302c may be provided the other one of the stationary portion 210c and the movable portion 220c. As shown in FIG 8, it is preferable that the locking member provided thus is provided at a position far from the pivot 32.

In the meantime, the movable portion 220c and the stationary portion 210c may, or may not be symmetry in left/right sides. The upper housing 200c having the movable portion 220c and the stationary portion 210c is convenient because slight rotation of the movable portion 220c enables to secure the space for taking out or inserting the disc 10. Moreover, since a movable portion of the upper housing of the disc cartridge is minimized, an overall deformation of the disc cartridge is prevented, and stable opening/closing can be made. Furthermore, when the disc 10 is separated from the cartridge, exposure of other mechanism related to the shutter opening/closing of the disc cartridge, and the like can be reduced.

In the meantime, the present invention is not limited to above embodiments, but a variety of modifications and variations may be possible as far as the modifications and the variations do not depart from the scope of the invention. Of course, the upper housing 200c may have a structure in which the upper housing fully covers the disc 10 for protecting the label surface 15 of the disc 10 from an outside. Moreover, the upper housing 200c may be divided into two rotatable movable portions 220c for opening/closing all of the movable portions 220c or selective opening/closing thereof.

### FOURTH EMBODIMENT AND VARIATIONS WHICH ARE NOT IN SCOPE OF THE CLAIMS

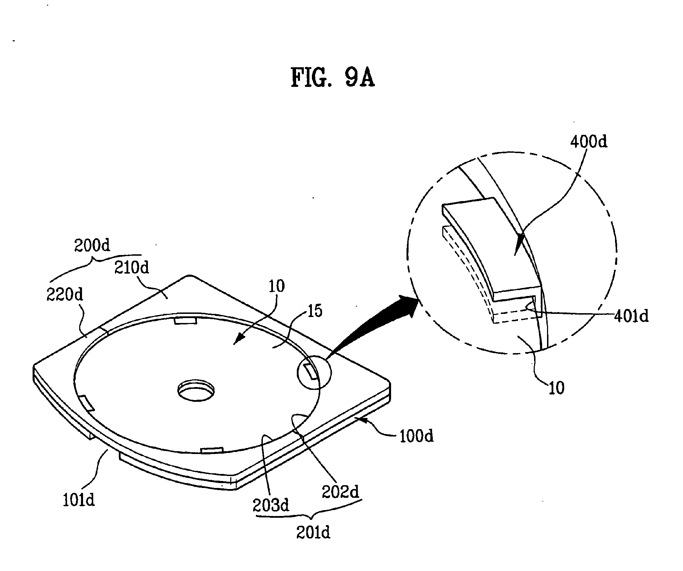

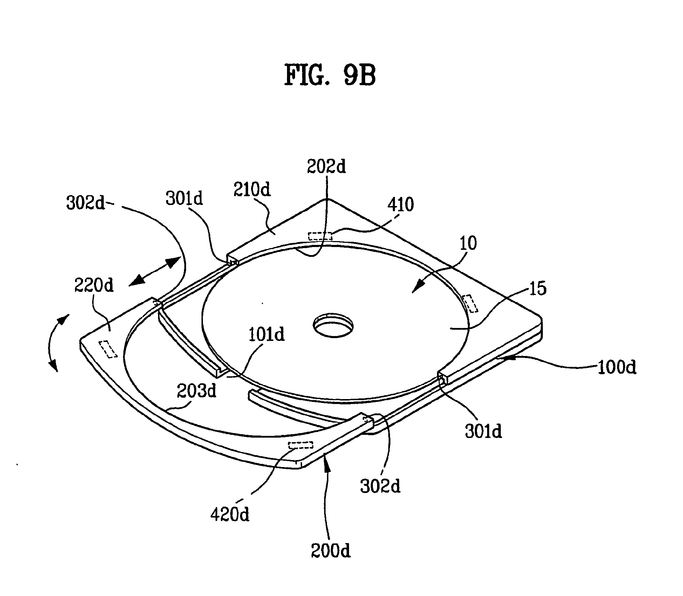

FIGS. 9A, and 9B illustrate perspective views each showing a disc cartridge in accordance with a fourth preferred embodiment of the present invention, and FIGS. 9C to 12B illustrate perspective views of variations of the disc cartridge in accordance with the fourth preferred embodiment of the present invention. As can be noted from above drawings, the cartridge in accordance with a fourth preferred embodiment, or variations thereof of the present invention includes a lower housing 100d having a window 101d identical to the lower housing 100a, 100b, or 100c in the first to third embodiments described above. However, the upper housing 200d coupled to the lower housing 100d includes a stationary portion 210d and a movable portion 220d for holding the disc 100d together with the lower housing 100d, with a possibility of taking out the disc 10 therefrom, wherein the cartridge in accordance with a fourth preferred embodiment, or variations thereof of the present invention is different from the first to third embodiments in that the movable portion 220d is slidably coupled to the lower housing 100d in a horizontal direction. Therefore, the cartridge in accordance with a fourth preferred embodiment, or variations thereof of the present invention will be described centered on the difference described above.

Referring to FIGS. 9A and 9B, the upper housing 200d includes a stationary portion 210d securely mounted on the lower housing 100d, and a movable portion 220d coupled to the lower housing 100d so as to be slidable in a horizontal direction. The movable portion 220d is movable, for an example, along a radial direction of the disc 10, beyond an edge of the lower housing 100d. Therefore, as the movable portion 220d moves in a horizontal direction of the cartridge, the movable portion 220d covers a portion of the label surface 15 of the disc 10 to hold the disc 10 as shown in FIG. 9A, or moves beyond an edge of the lower housing 100d to secure a space for taking out the disc 10.

Referring to FIG. 9A, the upper housing 200d including the stationary portion 210d and the movable portion 220d is provided with an opening 201d for exposing a portion of the label surface 15 of the disc 10. As shown in FIG 9B, the opening 201d described above is defined by cut-away portions 202d and 203d provided to opposite surfaces of the movable portion and the stationary portion 210d when the movable portion 220d covers the portion of the disc 10. As described before, since the opening 201d is smaller than the disc 10, the disc 10 can not be taken out of the opening 201 d when the movable portion 220d and the stationary portion 210a are coupled.

Referring to FIGS. 9A and 9B, the disc cartridge in accordance with the fourth preferred embodiment of the present invention is provided with a disc holder 400d for preventing the disc 10 between the upper housing 200d and the lower housing 100d from shaking during transportation and storage. The disc holder 400d holds an edge of the disc 10 when the movable portion 220d and the stationary portion 210d are coupled, and includes at least one first holder 410d and at least one second holder 420d. As shown in FIGS. 9A and 9B, the first holder 410d is between the stationary portion 210d and the lower housing 100d, and has a slot 401d for inserting and holding the edge of the disc 10. It is preferable that the first holder 410d is rigidly secured at least to one of the stationary portion 210d and the lower housing 100d. The second holder 420d is between the movable portion 220d and the lower housing 100d, and has a slot 401d for inserting and holding the edge of the disc 10. As shown in FIG. 9B, the second holder 420d is secured to the movable portion 220d so as to be movable together with the movable portion 220d, for holding the edge of the disc 10 or releasing the disc 10. The disc holders 400d are arranged around the disc 10 at 120 degree, or 90 degree intervals.

As described before, the disc cartridge in accordance with the fourth preferred embodiment of the present invention includes a locking member for preventing the movable portion 220d from moving easily when the movable portion 220d covers the portion of the disc 10. The locking member includes a projection 301d and a hole 302d, wherein, for an example, as shown in FIG 9B, the projection 301d is provided to the stationary portion 210d, and the hole 302d is provided to the movable portion 220d so that the hole 302d receives the projection 301d when the stationary portion 210d covers the portion of the disc 10. However, the configuration is not limited to this, but the projection 301 d may be provided to the movable portion 220d and the hole 302d may be provided to the stationary portion 210a. Moreover, though not shown, the projection 301d may be formed on one of the movable portion 220d and the lower housing 100d, and the hole 302d may be formed in the other one of the movable portion 220d and the lower housing 100d. Besides, as the locking member, a press type button, or a slide type button using a spring and a hook which is used widely presently may be employed.

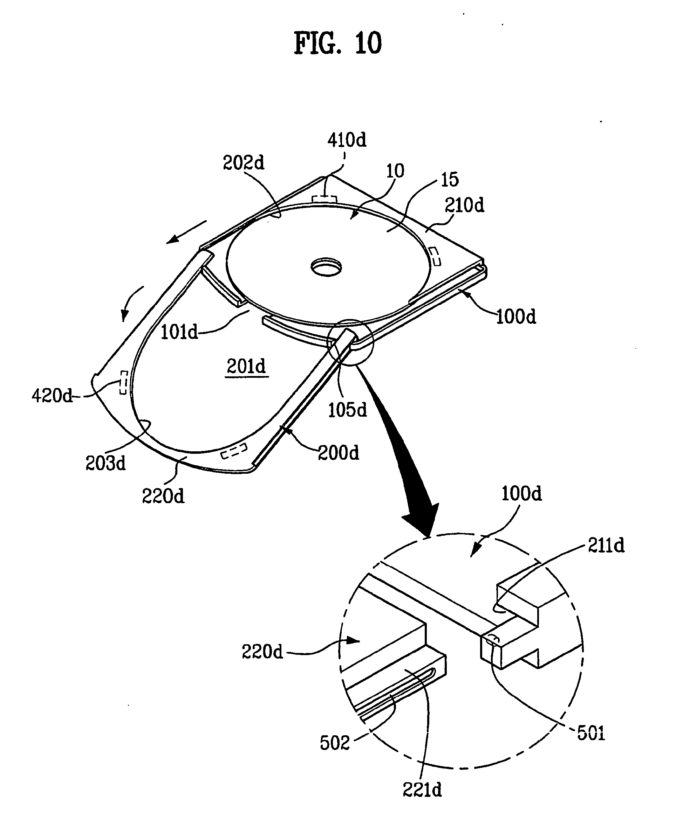

In the meantime, referring to FIG. 10, in the disc cartridge in accordance with a fourth preferred embodiment of the present invention, the sliding of the movable portion 220d is guided by the guide protrusion 221d and the guide channel 211d. As shown in FIG. 10, the guide protrusions 221d project from opposite sides of the movable portion, and the guide channels 211d are provided in opposite sides of the lower housing 100d such that the guide protrusions 221d are inserted, and slide in the guide channel 211d. In this instance, the guide protrusions 221 d and the guide channels 211 d are extended along a sliding direction of the movable portion 220d.

The disc cartridge is provided with a limiting member for preventing the movable portion 220d from breaking away from the stationary portion 210d when the movable portion 220d slides on the stationary portion 210d. The limiting member includes a projection 501, and an elongated groove 502, wherein, as shown in FIG. 10, the projection 501 is projected from the guide channel 211d toward the movable portion 220d, and the elongated groove is formed in the guide protrusion 221d extended along a sliding direction of the movable portion 220d such that the projection 501 is inserted, and slides in the elongated groove 502. As shown in FIG. 10, the movable portion 220d has a closed end for preventing the movable portion 220d from moving any further when the movable portion 220d is moved sliding more than a predetermined distance with respect to the stationary portion 210d. As shown in FIG 10, if the projection is provided to, not a middle, but an end of the side of the lower housing 100d, the movable portion 220d can be drawn out of the lower housing 100d to the maximum.

The movable portion 220d slidably coupled to the lower housing 100d can be separated from the stationary portion 210d, slide on the lower housing 100d, and rotated in up/down direction with respect to the lower housing 100d as shown in FIGS. 10 ∼ 12B. For this, the sliding and rotating of the movable portion 220d are guided by the projection and the elongated groove. The elongated groove 502 is formed in one of the movable portion 220d and the lower housing 100d extended along a sliding direction of the movable portion 220d, and the projection is provided to the other one of the movable portion 220d and the lower housing 100d, such that the projection can slide or rotate in the groove. As shown in FIG 10, though the elongated groove and the projection may be provided separate from the elongated groove 502 and the projection 501 of the limiting member, it is preferable that the elongated groove 502 and the projection 501 serve the same for simplicity of a cartridge structure. Above structure enables the movable portion 220d slides along opposite sides of the lower housing 100d until the sliding ends at corners of the lower housing 100d when the movable portion 220d can rotate in up/down directions. Moreover, as shown in FIG 10, it is preferable that the lower housing 100d has cut away portions 105d at corners so that a portion of the movable portion 220d can make easy pass, and rotating when the movable portion 220d rotates to a lower side of the cartridge.

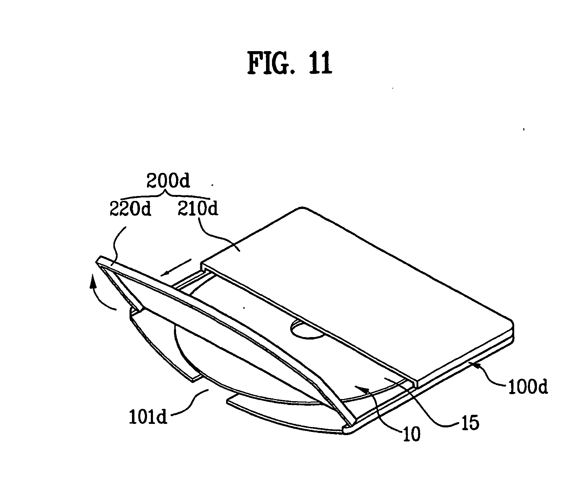

Referring to FIGS. 10 to 12B, the disc cartridge in accordance with the fourth preferred embodiment of the present invention can be embodied as a variety of variations having shapes of the movable portion 220d and the stationary portion 210d varied slightly. For an example, as shown in FIG. 10, portions for forming an opening 201d are provided to the movable portion 220d and the stationary portion 210d respectively, by providing elongated opposite guide portions for sliding of the movable portion 220d, the sliding of the movable portion 220d can be made smoothly without play in opening/closing the cartridge. As another example, as shown in FIGS. 11 to 12B, by providing no portions respectively to the movable portions 220d and the stationary portion 210d for forming the opening 201d, exposure of the disc 10 can be prevented perfectly when the cartridge is closed. For reference, in FIGS. 9A, 9B, and 11 to 12B, structures for sliding, or rotating the movable portion 220d are shown, schematically. This is because the structures may be one as shown in FIG. 10, or other variations of sliding structures. For an example, the guide protrusions 221 d may be provided, not to the sides, but to an underside, of the movable portion 220d, and similarly, the guide channel 211d is provided to the underside of the movable portion 220d, and guide protrusion 221d is provided to an upper surface of the lower housing 100d. A sliding type by means of rollers and guide rails may be also employed.

In order to apply the disc cartridge in accordance with the fourth preferred embodiment of the present invention to the disc recorder and the reader that receive disc only, it is required to separate the disc 10 from the cartridge. For this, as shown in FIG. 9B, the movable portion 220d is pushed to an opposite side of the stationary portion 210d. Then, locking of the locking member is released, and the second holders 420d holding edges of the disk 10 move together with the movable portion 220d. In this instance, even if the second holders 420d release the disc 10, since the first holders 410d hold edges of the disc 100 still, the disc 10 can be held between the lower housing 100d and the stationary portion 210d, securely. Next, as shown in FIGS. 10 to 12B, the movable portion 220d is rotated about the projection 501 at a point sliding of the movable portion 220d is end. Then, the disc 10 is pulled out of the stationary portion 210d, to make convenient and safe separation of the disc 10 from the cartridge.

Opposite to this, if it is intended to mount the separated disc 10 on the cartridge again, the disc 10 is inserted between the stationary portion 210d and the lower housing 100d, inserts edges of the disc 10 into the slots 401d of the first holders 410d, and closes the movable portion 220d. In this instance, the movable portion 220d rotates about the projection 501 opposite to above, moves along opposite sides of the lower housing 100d, and coupled to the stationary portion 210d. Then, the second holders 420d hold edges of the disc 10, to hold the disc 10 securely, and the locking member fastens the movable portion 220d to the stationary portion 210d, securely.

Thus, the disc cartridge in accordance with the fourth preferred embodiment of the present invention can prevent deformation of an overall shape of the disc cartridge in a state the disc cartridge is opened, and maintain an overall rigidity of the disc cartridge even a process the disc 10 is taken out of the cartridge, because the upper housing 200d has the stationary portion 210d and the movable portion 220d separated from each other, and movable portion is configured to rotate after sliding. Moreover, the disc holders 400d respectively provided to the stationary portion 210d and the movable portion 220d enable safe storage of the disc 10, and prevent damage of the disc 10 even in a process of mounting/dismounting the disc 10 to/from the cartridge. Meanwhile, though not shown, the disc holder 400d may be respectively provided to the stationary portion 210c and the movable portion 220c of the disc cartridge in accordance with the third preferred embodiment, and the variation thereof shown in FIG. 8.

### FIFTH EMBODIMENT WHICH ARE NOT IN SCOPE OF THE CLAIMS

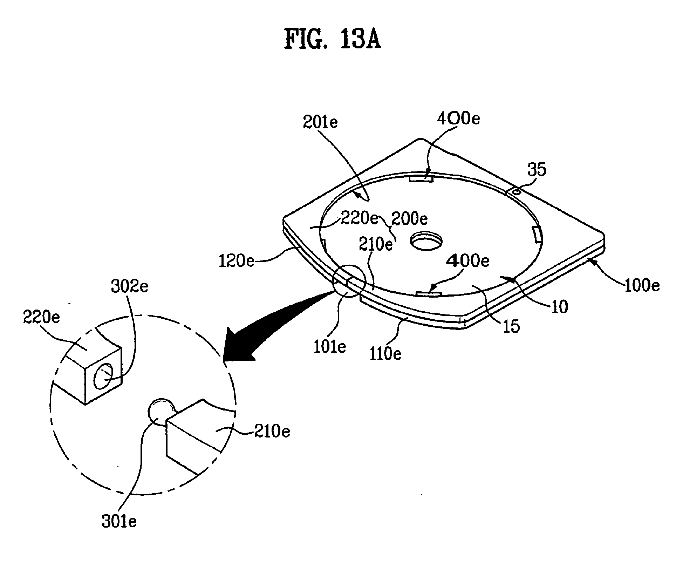

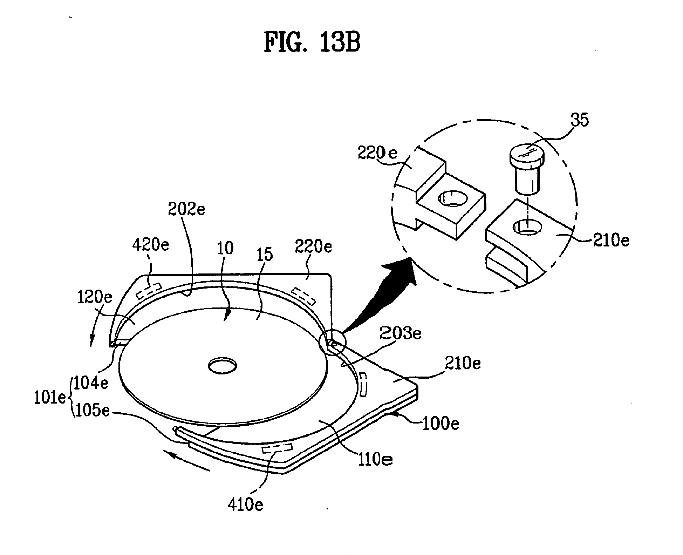

In foregoing embodiments, while the lower housing is formed as one body, and stationary, the upper housing has at least a portion formed movable. In comparison to this, the disc cartridge in accordance with the fifth preferred embodiment of the present invention is different from above embodiment described before in that a portion of, not only the upper housing, but also the lower housing is movable. FIGS. 13A, and 13B illustrate disc cartridges in accordance with a fifth preferred embodiment of the present invention, referring to which the disc cartridge in accordance with a fifth preferred embodiment of the present invention will be described, in more detail.

Referring to FIGS. 13A and 13B, a lower housing 100e having a window 101e includes a first piece 110e, and a second piece 120e each for rotating around a rotating axis in a horizontal direction to open/close the first piece 110e and the second piece 120e. The first piece 110e, and the second piece 120e have cut away portions 104e and 105e in opposite surfaces, to define the window 101e when the first piece 110e and the second piece 120e of the lower housing 100e are closed.

The upper housing 200e is secured to the lower housing 100e so as to hold the disc 10 between the upper housing 200e and the lower housing 100e such that the disc 10 can be taken out. For this, the lower housing includes the first piece 210e and the second piece 220e for rotating about a hinge shaft in a horizontal direction to open/close the first piece 210e and the second piece 220e. The upper housing 200e has an opening 201e for exposing a portion of the label surface 15 of the disc 10, as described before, having a size the disc 10 can not escape by itself. The first piece 210e, and the second piece 220e of the upper housing 200e have cut away portions 203e and 202e in opposite surfaces thereof respectively, to define the opening 201e when the first piece 210e and the second piece 220e of the upper housing 200e are closed.

The first piece 210e of the upper housing 200e is secured to the first piece 110e, and the second piece 120e of the upper housing 200e is secured to the second piece 120e of the lower housing 100e. Accordingly, the disc cartridge in accordance with the fifth preferred embodiment of the present invention includes assemblies of two opposite pieces, i.e., an assembly of the first pieces 210e, and 110e respectively of the upper and lower housings 200e, and 100e, and an assembly of the second pieces 220e, and 120e respectively of the upper housing and the lower housing 200e and 100e. In this instance, as shown in FIGS. 13A and 13B, the two assemblies are rotatably coupled to each other with one hinge 35.

The disc cartridge is further provided with a locking member for preventing the two assemblies, i.e., an assembly of the first pieces 210e, and 110e respectively of the upper and lower housings 200e, and 100e, and an assembly of the second pieces 220e, and 120e respectively of the upper housing and the lower housing 200e and 100e, coupled with the hinge 35, from opening when the two assemblies are closed. As described before, the locking member includes a projection 301e and a hole 302e, wherein, as shown in FIG 13A, the projection is provided to the first piece 210e of the upper housing 200e, and the holes 302e is provided to the second piece 220e of the upper housing 200e, so that the hole 302e receives the projection 301e when the two assemblies are closed. Configuration of the projection 301e and the hole 302e is not limited to this, but the projection 301e and the hole 302e may be provided to opposite positions.

Between the pieces of the assemblies, i.e., between the first pieces 110e and 210e and between the second pieces 120e and 220e, there are spaces for inserting edges of the disc 10 therein respectively. Accordingly, the edges of the disc 10 are inserted in, and secure to the spaces formed in sides of the assemblies. As described before, between the upper housing 200e and the lower housing 100e, there are disc holders 400e for holding the edges of the disc 10 so that the disc 10 held between the upper, and lower housings 200e, and 100e does not shake when all the upper housing 200e and the lower housing 100e are joined.

As described before, the disc holder 400e includes a first holder 410e and a second holder 420e, wherein, as shown in FIGS. 13A and 13B, the first holders 410e are provided to the first pieces 210e and 110e of the upper and lower housings 200e and 100e, and the second holders are provided to the second pieces 220e and 120e of the upper and lower housings. As described before, each of the first holder 410e and the second holder 420e has a slot for inserting, and holding the edge of the disc 10. As described before, the disc holders 400e are arranged at 120 degree, or 90 degree intervals to surround the disc 10. As described before, the disc holder 400e provided thus enable to secure storage of the disc 10 in the cartridge, and to prevent damage of the disc 10 when the disc 10 is dismounted/mounted from/to the cartridge, effectively.

In order to apply the disc cartridge in accordance with the fifth preferred embodiment of the present invention to the disc recorder and the reader that receive disc only, it is required to separate the disc 10 from the cartridge. For this, the two assemblies locked to each other with the locking members are rotated about the hinge 35, to open the two assemblies in left/right directions as shown in FIG 13B. Then, the disc 10 can be taken out of the cartridge through the opening, easily. Opposite to this, if it is intended to mount the disc 10 on the cartridge, the disc 10 is inserted in one of the first holder 410e and the second holder 420e in a state the assemblies are opened, the two assemblies are closed. Then, the other one of the first holder 410e and the second holder 420e are engaged with the edges of the disc 10, and along with this, the projection 301e is inserted in the hole 302e, such that the two assemblies are locked together in a state the disc 10 is securely held therein.

As has been described, the disc cartridge in accordance with the fifth preferred embodiment of the present invention has a structure in which left and right portions of the upper and lower housings rotate about a hinge, to open or close the left and right portions. Therefore, an overall distortion of the disc cartridge is prevented in a state the disc cartridge is opened, and an overall rigidity of the disc cartridge is also maintained in a process the disc 10 is removed.

The disc cartridge in accordance with the fifth preferred embodiment of the present invention is not limited to the foregoing embodiment, but various modifications and variations are possible as far as the embodiment does not depart from the scope of the invention. For an example, even in the hinge coupling of the two assemblies, as shown in an enlarged drawing in FIG 13B, one hinge 35 may be made to pass through the two assemblies, or a pivot is formed on one of the assemblies, and a hole is formed in the other one of the assemblies for inserting the pivot therein. A structure is also possible in which the label surface of the disc 10 is covered fully, when it is required that the two assemblies are opened until an entrance of the two assemblies becomes greater than a diameter of the disc 10.

It will be apparent to those skilled in the art that various modifications and variations can be made in the present invention without departing from the scope of the inventions. Thus, it is intended that the present invention covers the modifications and variations of this invention provided they come within the scope of the appended claims. As has been described, the disc cartridge of the present invention can be opened/closed easily, permitting easy mounting/dismounting of the disc to/from the disc cartridge. Accordingly, the disc cartridge of the present invention provides convenience of easy application of the disc, not only to the disc recorder and reader the receives the cartridge wholly, but also to the disc recorder and reader the receives the disc only.

## Claims

1. A disc cartridge comprising:
a lower housing (100a) having a window (101a) for a recorder or a reader to access to a read-out surface of a disc (10); and
an upper housing (200a) secured to the lower housing (100a) for holding the disc (10) between the lower housing (100a) and the upper housing (200a) such that the disc (10) can be taken out therefrom,
**characterized in that** the upper housing (200a) includes:
opposite stationary portions (210a) secured to the lower housing (100a) to expose a disc label surface, and
movable portions (220a) provided between the stationary portions (210a) such that the movable portions (220a) are rotatable in up/down directions each for covering a portion of the label surface to hold the disc, or secure a space for taking out the disc.

2. The disc cartridge as claimed in claim 1, wherein the movable portion (220a) is formed as one unit with the lower housing (100a) such that a connection portion thereof is foldable /unfoldable.

3. The disc cartridge as claimed in claim 1, wherein the movable portion (220a) is coupled to the lower housing (100a) or the stationary portion (210a) with a pivot

4. The disc cartridge as claimed in claim 1, 2 or 3, further comprising a locking member for preventing the movable portion from moving easily when the movable portion (220a) covers a portion of the label surface,
wherein the locking member includes :
a projection (301a) provided to one of the stationary portion (210a) and the movable portion (220a), and
a hole (302a) provided to the other one of the stationary portion (210a) and the movable portion (220a), for receiving the projection (301a) when the movable portion (220a) covers a portion of the label surface.

5. The disc cartridge as claimed in claim 1, 2 or 3, further comprising a locking member for preventing the movable portion from moving easily when the movable portion covers a portion of the label surface,
wherein the locking member includes:
a projection (311a) provided to one of the stationary portion (210a) and the lower housing (100a), and
a hole (312a) povided to the other one of the stationary portion (210a) and the lower housing (100a), for receiving the projection (311a) when the movable portion (220a) covers a portion of the label surface.

6. A disc cartridge comprising:
a lower housing (100b) having a window for a recorder or a reader to access to a read-out surface of a disc (10); and
an upper housing (200b) secured to the lower housing (100b) for holding the disc (10) between the lower housing (100b) and the upper housing (200b) such that the disc can be taken out therefrom,
**characterized in that** the upper housing (200b) includes:
opposite stationary portions (210b) secured to the lower housing (100b) to expose a disc label surface, and
movable portions (200b) provided between the stationary portions (210b) such that the movable portions (220b) are slidable in a horizontal direction with respect to the stationary portions (210b) for covering a portion of the label surface to hold the disc, or secure a space for taking out the disc.

7. The disc cartridge as claimed in claim 6, wherein the movable portions 220(b) are one pair each movable in a radial direction of the disc.

8. The disc cartridge as claimed in claim 6, wherein the movable portions (220b) can be projected beyond an edge of the lower housing (100b).

9. The disc cartridge as claimed in claim 6, wherein the movable portion (220b) slides guided by guide protrusions (221b) and guide channels (211b),
wherein the guide protrusion (221b) is projected from one of the movable portion (220b) and the stationary portion (210b) and the guide channel (211b) is provided to the other one of the movable portion (220b) and the stationary portion (210b) so that the guide protrusion (221b) is inserted, and slides in the guide channel (211b).

10. The disc cartridge as claimed in claim 6, wherein the movable portion (220b) slides guided by holding protrusions (223b) and guide protrusions (221b);
wherein the holding protrusion (223b) is projected from an upper surface of the stationary portion (210b) toward the movable portion (220b), and the guide protrusion (221b) is projected from a lower surface of the movable portion (220b) toward the stationary portion (210b), so that the guide protrusion (221b) is inserted, and slides in a channel formed between the holding protrusion (223b) and the lower housing (100b).

11. The disc cartridge as claimed in claim 6, wherein the movable portion (220b), slides guided by guide protrusions (221b) and guide channels (211b),
wherein the guide protrusion (221b) is projected from one of the movable portion (220b) and the lower housing (100b), and the guide channel (211b) is provided to the other one of the movable portion (220b) and the lower housing (100b) so that the guide protrusion (221b) is inserted, and slides in the guide channel (211b).

12. The disc cartridge as claimed in claim 6, further comprising a locking member for preventing the movable portion (220b) from moving easily when the movable portion (220b) covers a portion of the label surface,
wherein the locking member includes:
a projection (301b) provided to one of the stationary portion (210b) and the movable portion (220b), and
a hole (302b) provided to the other one of the stationary portion (210b) and the movable portion (220b), for receiving the projection (301b) when the movable portion (220b) covers a portion of the label surface.

13. The disc cartridge as claimed in claim 6, further comprising a locking member for preventing the movable portion (220b) form moving easily when the movable portion covers a portion of the label surface,
wherein the locking member includes :
a projection (301b) provided to one of the movable portion and the lower housing, and
a hole provided to the other one of the movable portion and the lower housing (100b), for receiving the projection when the movable portion covers a portion of the label surface.

14. The disc cartridge as claimed in claim 6, further comprising a limiting member for preventing the movable portion (220b) from breaking away from the stationary portion (210b) completely, when the movable portion (220b) slides on the stationary portion (210b),
wherein the limiting member includes:
a projection (301b) provided to one of the movable portion (220b) and the stationary portion (210b), and
a hole (302b, 303b) provided to the other one of the movable portion (220b) and the stationary portion (210b), for receiving the projection when the movable portion (220b) slides on the stationary portion (210b) for more than a predetermined distance.

15. A disc cartridge comprising:
a lower housing (100a) having a window (101a) for a recorder or a reader to access to a read-out surface of a disc (10); and
an upper housing (200a) secured to the lower housing (100a) for holding the disc between the lower housing (100a) and the upper housing (200a) such that the disc (10) can be taken out therefrom, the upper housing (200a) having at least a portion configured movable for securing a space for taking out the disc therethrough;
**characterized in that**
the upper housing includes stationary portions (210) secured to the lower housing (100a), and movable portions (220) movably coupled to the stationary portions (210);
wherein the movable portions (220) are slidably coupled to the stationary portions, the movable portions being slidable in a horizontal direction; wherein
the movable portions arranged oppositely in a periphery of the upper housing (200a), each of the movable portions being slidable in a radial direction of the disc (10).

## Patentansprüche

1. Diskkassette mit:
einem unteren Gehäuse (100a) mit einem Fenster (101a) für einen Schreiber oder einen Leser, um auf eine Auslesefläche einer Disk (10) zuzugreifen; und
einem am unteren Gehäuse (100a) befestigten oberen Gehäuse (200a) zum Halten der Disk (10) zwischen dem unteren Gehäuse (100a) und dem oberen Gehäuse (200a), so daß die Disk (10) daraus entnommen werden kann,
**dadurch gekennzeichnet, daß** das obere Gehäuse (200a) aufweist:
entgegengesetzte feststehende Abschnitte (210a), die am unteren Gehäuse (100a) befestigt sind, um eine Disklabelfläche freizulegen, und
bewegliche Abschnitte (220a), die zwischen den feststehenden Abschnitten (210a) so vorgesehen sind, daß die beweglichen Abschnitte (220a) jeweils zum Abdecken eines Abschnitts der Labelfläche in Aufwärts-/Abwärtsrichtung drehbar sind, um die Disk zu halten oder einen Raum zum Entnehmen der Disk zu gewährleisten.

2. Diskkassette nach Anspruch 1, wobei der bewegliche Abschnitt (220a) als eine Einheit mit dem unteren Gehäuse (100a) so gebildet ist, daß ein Verbindungsabschnitt davon ein-/ausklappbar ist.

3. Diskkassette nach Anspruch 1, wobei der bewegliche Abschnitt (220a) mit dem unteren Gehäuse (100a) oder dem feststehenden Abschnitt (210a) mit einem Drehzapfen gekoppelt ist.

4. Diskkassette nach Anspruch 1, 2 oder 3, ferner mit einem Verriegelungsteil zum Verhindern, daß sich der bewegliche Abschnitt leicht bewegt, wenn der bewegliche Abschnitt (220a) einen Abschnitt der Labelfläche abdeckt, wobei das Verriegelungsteil aufweist:
einen Vorsprung (301a), der an einer Komponente aus dem feststehenden Abschnitt (210a) und dem beweglichen Abschnitt (220a) vorgesehen ist, und
ein Loch (302a), das an der anderen Komponente aus dem feststehenden Abschnitt (210a) und dem beweglichen Abschnitt (220a) vorgesehen ist, zum Aufnehmen des Vorsprungs (301a), wenn der bewegliche Abschnitt (220a) einen Abschnitt der Labelfläche abdeckt.

5. Diskkassette nach Anspruch 1, 2 oder 3, ferner mit einem Verriegelungsteil zum Verhindern, daß sich der bewegliche Abschnitt leicht bewegt, wenn der bewegliche Abschnitt einen Abschnitt der Labelfläche abdeckt,
wobei das Verriegelungsteil aufweist:
einen Vorsprung (311a), der an einer Komponente aus dem feststehenden Abschnitt (210a) und dem unteren Gehäuse (100a) vorgesehen ist, und
ein Loch (312a), das an der anderen Komponente aus dem feststehenden Abschnitt (210a) und dem unteren Gehäuse (100a) vorgesehen ist, zum Aufnehmen des Vorsprungs (311a), wenn der bewegliche Abschnitt (220a) einen Abschnitt der Labelfläche abdeckt.

6. Diskkassette mit:
einem unteren Gehäuse (100b) mit einem Fenster für einen Schreiber oder einen Leser, um auf eine Auslesefläche einer Disk (10) zuzugreifen; und
einem am unteren Gehäuse (100b) befestigten oberen Gehäuse (200b) zum Halten der Disk (10) zwischen dem unteren Gehäuse (100b) und dem oberen Gehäuse (200b), so daß die Disk daraus entnommen werden kann,
**dadurch gekennzeichnet, daß** das obere Gehäuse (200b) aufweist:
entgegengesetzte feststehende Abschnitte (210b), die am unteren Gehäuse (100b) befestigt sind, um eine Disklabelfläche freizulegen, und
bewegliche Abschnitte (220b), die zwischen den feststehenden Abschnitten (210b) so vorgesehen sind, daß die beweglichen Abschnitte (220b) im Hinblick auf die feststehenden Abschnitte (210b) zum Abdecken eines Abschnitts der Labelfläche in waagerechter Richtung gleitfähig sind, um die Disk zu halten oder einen Raum zum Entnehmen der Disk zu gewährleisten.

7. Diskkassette nach Anspruch 6, wobei die beweglichen Abschnitte (220b) ein Paar sind, das jeweils in Radialrichtung der Disk beweglich ist.

8. Diskkassette nach Anspruch 6, wobei die beweglichen Abschnitte (220b) über eine Kante des unteren Gehäuses (100b) hinaus vorstehen können.

9. Diskkassette nach Anspruch 6, wobei der bewegliche Abschnitt (220b) durch Führungsvorsprünge (221b) und Führungskanäle (211b) geführt gleitet,
wobei der Führungsvorsprung (221b) von einer Komponente aus dem beweglichen Abschnitt (220b) und dem feststehenden Abschnitt (210b) vorsteht und der Führungskanal (211b) an der anderen Komponente aus dem beweglichen Abschnitt (220b) und dem feststehenden Abschnitt (210b) vorgesehen ist, so daß der Führungsvorsprung (221b) in den Führungskanal (211b) eingesetzt ist und darin gleitet.

10. Diskkassette nach Anspruch 6, wobei der bewegliche Abschnitt (220b) durch Haltevorsprünge (223b) und Führungsvorsprünge (221b) geführt gleitet,
wobei der Haltevorsprung (223b) von einer Oberseite des feststehenden Abschnitts (210b) zum beweglichen Abschnitt (220b) vorsteht und der Führungsvorsprung (221b) von einer Unterseite des beweglichen Abschnitts (220b) zum feststehenden Abschnitt (210b) vorsteht, so daß der Führungsvorsprung (221b) in einen Kanal eingesetzt ist und darin gleitet, der zwischen dem Haltevorsprung (223b) und dem unteren Gehäuse (100b) gebildet ist.

11. Diskkassette nach Anspruch 6, wobei der bewegliche Abschnitt (220b) durch Führungsvorsprünge (221b) und Führungskanäle (211b) geführt gleitet,
wobei der Führungsvorsprung (221b) von einer Komponente aus dem beweglichen Abschnitt (220b) und dem unteren Gehäuse (100b) vorsteht und der Führungskanal (211b) an der anderen Komponente aus dem beweglichen Abschnitt (220b) und dem unteren Gehäuse (100b) vorgesehen ist, so daß der Führungsvorsprung (221b) in den Führungskanal (211b) eingesetzt ist und darin gleitet.

12. Diskkassette nach Anspruch 6, ferner mit einem Verriegelungsteil zum Verhindern, daß sich der bewegliche Abschnitt (220b) leicht bewegt, wenn der bewegliche Abschnitt (220b) einen Abschnitt der Labelfläche abdeckt, wobei das Verriegelungsteil aufweist:
einen Vorsprung (301b), der an einer Komponente aus dem feststehenden Abschnitt (210b) und dem beweglichen Abschnitt (220b) vorgesehen ist, und
ein Loch (302b), das an der anderen Komponente aus dem feststehenden Abschnitt (210b) und dem beweglichen Abschnitt (220b) vorgesehen ist, zum Aufnehmen des Vorsprungs (301b), wenn der bewegliche Abschnitt (220b) einen Abschnitt der Labelfläche abdeckt.

13. Diskkassette nach Anspruch 6, ferner mit einem Verriegelungsteil zum Verhindern, daß sich der bewegliche Abschnitt (220b) leicht bewegt, wenn der bewegliche Abschnitt einen Abschnitt der Labelfläche abdeckt,
wobei das Verriegelungsteil aufweist:
einen Vorsprung (301b), der an einer Komponente aus dem beweglichen Abschnitt und dem unteren Gehäuse vorgesehen ist, und
ein Loch, das an der anderen Komponente aus dem beweglichen Abschnitt und dem unteren Gehäuse (100b) vorgesehen ist, zum Aufnehmen des Vorsprungs, wenn der bewegliche Abschnitt einen Abschnitt der Labelfläche abdeckt.

14. Diskkassette nach Anspruch 6, ferner mit einem Begrenzungsteil zum Verhindern, daß sich der bewegliche Abschnitt (220b) vom feststehenden Abschnitt (210b) vollständig löst, wenn der bewegliche Abschnitt (220b) auf dem feststehenden Abschnitt (210b) gleitet,
wobei das Begrenzungsteil aufweist:
einen Vorsprung (301b), der an einer Komponente aus dem beweglichen Abschnitt (220b) und dem feststehenden Abschnitt (210b) vorgesehen ist, und
ein Loch (302b, 303b), das an der anderen Komponente aus dem beweglichen Abschnitt (220b) und dem feststehenden Abschnitt (210b) vorgesehen ist, zum Aufnehmen des Vorsprungs, wenn der bewegliche Abschnitt (220b) über mehr als eine vorbestimmte Distanz auf dem feststehenden Abschnitt (210b) gleitet.

15. Diskkassette mit:
einem unteren Gehäuse (100a) mit einem Fenster (101a) für einen Schreiber oder einen Leser, um auf eine Auslesefläche einer Disk (10) zuzugreifen; und
einem am unteren Gehäuse (100a) befestigten oberen Gehäuse (200a) zum Halten der Disk zwischen dem unteren Gehäuse (100a) und dem oberen Gehäuse (200a), so daß die Disk (10) daraus entnommen werden kann, wobei das obere Gehäuse (200a) mindestens einen Abschnitt hat, der zum Gewährleisten eines Raums zum Entnehmen der Disk durch ihn beweglich konfiguriert ist,
**dadurch gekennzeichnet, daß** das obere Gehäuse aufweist:
am unteren Gehäuse (100a) befestigte feststehende Abschnitte (210) und mit den feststehenden Abschnitten (210) beweglich gekoppelte bewegliche Abschnitte (220);
wobei die beweglichen Abschnitte (220) mit den feststehenden Abschnitten gleitfähig gekoppelt sind, wobei die beweglichen Abschnitte in waagerechter Richtung gleitfähig sind; wobei
die beweglichen Abschnitte in einem Umfang des oberen Gehäuses (200a) entgegengesetzt angeordnet sind, wobei jeder der beweglichen Abschnitte in Radialrichtung der Disk (10) gleitfähig ist.

## Revendications

1. Cartouche de disque, comprenant :
un logement inférieur (100a) comportant une fenêtre (101a) pour un enregistreur ou
un lecteur pour accéder à une surface de lecture d'un disque (10) ; et
un logement supérieur (200a) fixé au logement inférieur (100a) pour retenir le disque (10) entre le logement inférieur (100a) et le logement supérieur (200a), de sorte que le disque (10) puisse en être extrait,
**caractérisée en ce que** le logement supérieur (200a) comprend :
des parties stationnaires opposées (210a) fixées au logement inférieur (100a) pour exposer une surface d'étiquette de disque, et
des parties mobiles (220a) prévues entre les parties stationnaires (210a) de sorte que les parties mobiles (220a) soient rotatives dans des directions ascendante/descendante, chacune pour recouvrir une partie de la surface d'étiquette pour retenir le disque, ou garantir un espace pour enlever le disque.

2. Cartouche de disque selon la revendication 1, dans laquelle la partie mobile (220a) est formée de façon monobloc avec le logement inférieur (100a) de sorte qu'une partie de liaison de ceux-ci soit pliable/dépliable.

3. Cartouche de disque selon la revendication 1, dans laquelle la partie mobile (220a) est accouplée au logement inférieur (100a) ou à la partie stationnaire (210a) avec un pivot.

4. Cartouche de disque selon la revendication 1, 2 ou 3, comprenant en outre un élément de verrouillage pour empêcher la partie mobile de se déplacer facilement lorsque la partie mobile (220a) recouvre une partie de la surface d'étiquette,
dans laquelle l'élément de verrouillage comprend :
une saillie (301a) prévue sur un élément parmi la partie stationnaire (210a) et la partie mobile (220a), et
un orifice (302a) prévu sur l'autre élément parmi la partie stationnaire (210a) et la partie mobile (220a), pour recevoir la saillie (301a) lorsque la partie mobile (220a) recouvre une partie de la surface d'étiquette.

5. Cartouche de disque selon la revendication 1, 2 ou 3, comprenant en outre un élément de verrouillage pour empêcher la partie mobile de se déplacer facilement lorsque la partie mobile recouvre une partie de la surface d'étiquette,
dans laquelle l'élément de verrouillage comprend :
une saillie (311a) prévue sur un élément parmi la partie stationnaire (210a) et le logement inférieur (100a), et
un orifice (312a) prévu sur l'autre élément parmi la partie stationnaire (210a) et le logement inférieur (100a), pour recevoir la saillie (311 a) lorsque la partie mobile (220a) recouvre une partie de la surface d'étiquette.

6. Cartouche de disque, comprenant :
un logement inférieur (100b) comportant une fenêtre pour un enregistreur ou un lecteur pour accéder à une surface de lecture d'un disque (10) ; et
un logement supérieur (200b) fixé au logement inférieur (100b) pour retenir le disque (10) entre le logement inférieur (100b) et le logement supérieur (200b) de sorte que le disque puisse en être extrait,
**caractérisée en ce que** le logement supérieur (200b) comprend :
des parties stationnaires opposées (210b) fixées au logement inférieur (100b) pour exposer une surface d'étiquette de disque, et
des parties mobiles (220b) prévues entre les parties stationnaires (210b) de sorte que les parties mobiles (220b) coulissent dans une direction horizontale par rapport aux parties stationnaires (210b) pour recouvrir une partie de la surface d'étiquette pour retenir le disque, ou garantir un espace pour enlever le disque.

7. Cartouche de disque selon la revendication 6, dans laquelle les parties mobiles (220b) sont une paire, chacune mobile dans une direction radiale du disque.

8. Cartouche de disque selon la revendication 6, dans laquelle les parties mobiles (220b) peuvent faire saillie au-delà d'un bord du logement inférieur (100b).

9. Cartouche de disque selon la revendication 6, dans laquelle la partie mobile (220b) coulisse, guidée par des protubérances de guidage(221b) et des gorges de guidage (211b),
dans laquelle la protubérance de guidage (221b) fait saillie à partir d'un élément parmi la partie mobile (220b) et la partie stationnaire (210b), et la gorge de guidage (211b) est prévue sur l'autre élément parmi la partie mobile (220b) et la partie stationnaire (210b) de sorte que la protubérance de guidage (221b) soit insérée, et coulisse dans la gorge de guidage (211b).

10. Cartouche de disque selon la revendication 6, dans laquelle la partie mobile (220b) coulisse, guidée par des protubérances de retenue (223b) et des protubérances de guidage (221 b),
dans laquelle la protubérance de retenue (223b) fait saillie à partir d'une surface supérieure de la partie stationnaire (210b) vers la partie mobile (220b), et la protubérance de guidage (221b) fait saillie à partir d'une surface inférieure de la partie mobile (220b) vers la partie stationnaire (210b), de sorte que la protubérance de guidage (221b) soit insérée, et coulisse dans une gorge formée entre la protubérance de retenue (223b) et le logement inférieur (100b).

11. Cartouche de disque selon la revendication 6, dans laquelle la partie mobile (220b) coulisse, guidée par des protubérances de guidage (221b) et des gorges de guidage (211b),
dans laquelle la protubérance de guidage (221b) fait saillie à partir d'un élément parmi la partie mobile (220b) et le logement inférieur (100b), et la gorge de guidage (211b) est prévue sur l'autre élément parmi la partie mobile (220b) et le logement inférieur (100b) de sorte que la protubérance de guidage (221b) soit insérée, et coulisse dans la gorge de guidage (211b).

12. Cartouche de disque selon la revendication 6, comprenant en outre un élément de verrouillage pour empêcher la partie mobile (220b) de se déplacer facilement lorsque la partie mobile (220b) recouvre une partie de la surface d'étiquette,
dans laquelle l'élément de verrouillage comprend :
une saillie (301b) prévue sur un élément parmi la partie stationnaire (210b) et la partie mobile (220b), et
un orifice (302b) prévu sur l'autre élément parmi la partie stationnaire (210b) et la partie mobile (220b), pour recevoir la saillie (301b) lorsque la partie mobile (220b) recouvre une partie de la surface d'étiquette.

13. Cartouche de disque selon la revendication 6, comprenant en outre un élément de verrouillage pour empêcher la partie mobile (220b) de se déplacer facilement lorsque la partie mobile recouvre une partie de la surface d'étiquette,
dans laquelle l'élément de verrouillage comprend :
une saillie (301b) prévue sur un élément parmi la partie mobile et le logement inférieur, et
un orifice prévu sur l'autre élément parmi la partie mobile et le logement inférieur (100b), pour recevoir la saillie lorsque la partie mobile recouvre une partie de la surface d'étiquette.

14. Cartouche de disque selon la revendication 6, comprenant en outre un élément de limite pour empêcher la partie mobile (220b) de se séparer complètement de la partie stationnaire (210b), lorsque la partie mobile (220b) coulisse sur la partie stationnaire (210b),
dans laquelle l'élément de limite comprend :
une saillie (301b) prévue sur un élément parmi la partie mobile (220b) et la partie stationnaire (210b), et
un orifice (302b, 303b) prévu sur l'autre élément parmi la partie mobile (220b) et la partie stationnaire (210b), pour recevoir la saillie lorsque la partie mobile (220b) coulisse sur la partie stationnaire (210b) selon une distance supérieure à une distance prédéterminée.

15. Cartouche de disque, comprenant :
un logement inférieur (100a) comportant une fenêtre (101a) pour un enregistreur ou
un lecteur pour accéder à une surface de lecture d'un disque (10) ; et
un logement supérieur (200a) fixé au logement inférieur (100a) pour retenir le disque entre le logement inférieur (100a) et le logement supérieur (200a) de sorte que le disque (10) puisse en être extrait, le logement supérieur (200a) comportant au moins une partie configurée mobile pour garantir un espace pour enlever le disque à travers celui-ci,
**caractérisée en ce que**
le logement supérieur comprend des parties stationnaires (210) fixées au logement inférieur (100a), et des parties mobiles (220) accouplées de façon mobile aux parties stationnaires (210);
dans laquelle les parties mobiles (220) sont accouplées de façon coulissante aux parties stationnaires, les parties mobiles coulissant dans une direction horizontale ;
dans laquelle
les parties mobiles sont agencées de façon opposée dans une périphérie du logement supérieur (200a), chacune des parties mobiles coulissant dans une direction radiale du disque (10).
